# EUROPÄISCHE PATENTSCHRIFT

(11) **EP 4 180 785 B1**
(45) Veröffentlichungstag und Bekanntmachung des Hinweises auf die Patenterteilung: **03.12.2025**
(21) Anmeldenummer: 22206368.7
(22) Anmeldetag: 09.11.2022
(51) Int. Cl.: G01K 1/14, G01K 1/143, G01K 15/00, F24D 17/00, F24H 9/00

(54) **VERFAHREN UND TEMPERATURSENSOR ZUR NACHRÜSTUNG EINES WÄRMESPEICHERS MIT ZUSÄTZLICHEN TEMPERATURSENSOREN**
METHOD AND TEMPERATURE SENSOR FOR RETROFITTING A HEAT STORAGE UNIT WITH ADDITIONAL TEMPERATURE SENSORS
PROCÉDÉ ET CAPTEUR DE TEMPÉRATURE DE RÉÉQUIPEMENT D'UN ACCUMULATEUR DE CHALEUR AVEC DES CAPTEURS DE TEMPÉRATURE SUPPLÉMENTAIRES

(30) Priorität: 12.11.2021 DE 102021129509
(43) Veröffentlichungstag der Anmeldung: 17.05.2023
(73) Patentinhaber: Vaillant GmbH, 42859 Remscheid NRW (DE)
(72) Erfinder: Ruthenberg, Christian, 42477 Radevormwald (DE); Ellinghaus, Gunnar, 42499 Hückeswagen (DE)
(74) Vertreter: Popp, Carsten

(56) Entgegenhaltungen:
- US-A1- 2014 321 839
- ANONYMOUS MESSTECHNIK ET AL: "Handmessger�te & Sensoren GTE 130 OK | 601483 | Temperatur | GHM Greisinger", 28 September 2020 (2020-09-28), XP093213029, Retrieved from the Internet <URL:https://web.archive.org/web/20200928085816/https://www.greisinger.de/p/handmessgeraete-und-sensoren/temperatur/fuehler-thermoelemente/gte-130-ok/601483/> [retrieved on 20241009]

## Beschreibung

Die Erfindung betrifft ein Verfahren und einen Temperatursensor zur Nachrüstung eines Wärmespeichers mit zusätzlichen Temperatursensoren. Die Erfindung betrifft weiterhin ein Computerprogrammprodukt. Insbesondere geht es dabei um die Ertüchtigung von vorhandenen Wärmespeichern einer veralteten Heizungsanlage, die mit moderner Technik nachgerüstet werden soll, ohne dass dabei auch der Wärmespeicher ausgetauscht werden muss.

Wärmespeicher sind typischerweise aus Metall gefertigte Behälter von 50 bis 500 Litern Inhalt, die zur Verringerung von Wärmeverlusten an die Umgebung mit einer Isolierschicht umgeben sind, die wiederum oft einen dünnen metallischen Außenmantel zum Schutz vor Beschädigungen aufweist. In den meisten Fällen wird Wasser als Wärmeträgermedium eingesetzt, so dass es hier insbesondere um Warmwasserbehälter geht, aus denen Haushalte mit warmem Brauchwasser versorgt werden. Andere Wärmespeicher von Heizungsanlagen können aber ebenfalls betroffen sein.

Ältere Wärmespeicher nach dem Stand der Technik sind oft nur mit einem oder wenigen Temperatursensoren ausgestattet, weil man in erster Näherung von einer etwa gleichen Temperatur im ganzen Speicher ausgehen konnte und nur diese (Durchschnitts-)Temperatur für eine einfache Regelung benötigte. So wurden sogenannte monovalente Wärmespeicher nur mit einem, sogenannte bivalente Wärmespeicher mit zwei Temperatursensoren versehen. Bei modernen Heizungsanlagen werden jedoch generell viel mehr Sensoren als früher eingesetzt, um eine präzise und umweltfreundliche Regelung zu ermöglichen. Dazu gehört es auch, einen Wärmespeicher mit einer Mehrzahl von Sensoren in unterschiedlichen Höhen auszustatten, mit denen man z. B. ein Temperaturprofil über die Höhe feststellen kann, um eine Regelung mit diesen Informationen zu verbessern und eine genauere Kenntnis über den Zustand der ganzen Heizungsanlage zu erhalten. So kann man beispielsweise besser berechnen, wieviel (Wärme-)Energie im gesamten System ist, ob gerade gezapft wird und/oder wie effektiv das System geladen wird.

Temperatursensoren (meist Thermoelemente) werden üblicherweise beim Bau eines Wärmespeichers an der Außenseite eines Metallbehälters angebracht (insbesondere an Laschen oder in Rohren, die z. B. angeschweißt sind), so dass sie in wärmeleitender Verbindung zum Behälter und damit zu darin befindlichem Wasser stehen. Erst dann wird eine Wärmeisolierung (gegebenenfalls mit einer Außenhülle aus Metall oder Kunststoff) angebracht, wobei elektrische Zuleitungen meist innerhalb der Wärmeisolierung oder zumindest innerhalb von deren Außenhülle verlaufen. Eine nachträgliche Erhöhung der Zahl an vorhandenen Temperatursensoren ist daher schwierig und erfordert zumeist die Entfernung und Wiederanbringung der Wärmeisolierung, was insbesondere bei mit wärmeisolierendem Schaum eingeschäumten Speicherbehältern kaum möglich ist. Außerdem sind oft keine freien Laschen, Rohre oder andere geeignete Anbringungsorte vorhanden.

Die US 2014/0321839 A1 offenbart auch ein Verfahren zum Nachrüsten von Temperatursensoren für einen Wasserbehälter. Dabei werden, entsprechend der bekannten Vorgehensweise, zunächst Führungsrohre in die Wärmeisolierung eingearbeitet, in die die Temperatursensoren eingelassen werden. Die Temperatursensoren werden mittels einer Feder radial auf den Wasserbehälter gedrückt, sind also in den Führungsrohren beweglich angeordnet. Dieses Konzept erfordert jedoch eine aufwändige und exakte Vorbereitung, insbesondere hinsichtlich der Einbringung und Ausrichtung der Führungsrohre. Zudem verlangt die Federvorspannung einen besonderen Aufbau des Temperatursensors, wobei aufgrund der Temperaturempfindlichkeit der Feder ggf. auch Messergebnisse unterschiedlicher Qualität im Langzeitbetrieb auftreten können.

Aufgabe der vorliegenden Erfindung ist es, die mit Bezug auf den Stand der Technik geschilderten Probleme wenigstens teilweise zu lösen. Dazu sind ein Verfahren und ein Temperatursensor zur betriebstauglichen nachträglichen Anbringung von Temperatursensoren an einem vorhandenen Wärmespeicher zu schaffen, welche ohne Demontage einer Wärmeisolierung eine Nachrüstung ermöglichen. Dabei soll eine einfache, haltbare und gut wärmeleitende Anbringung ermöglicht werden.

Zur Lösung dieser Aufgabe dienen ein Verfahren, ein Temperatursensor und ein Computerprogrammprodukt gemäß den unabhängigen Ansprüchen. Vorteilhafte Ausgestaltungen und Weiterbildungen der Erfindung sind in den jeweiligen abhängigen Ansprüchen angegeben. Die Beschreibung, insbesondere im Zusammenhang mit der Zeichnung, veranschaulicht die Erfindung und gibt weitere Ausführungsbeispiele an.

Zur Lösung der Aufgabe trägt ein Verfahren bei zum Nachrüsten eines in einem Metallbehälter angeordneten Wärmespeichers einer Heizungsanlage, der mit einer Wärmeisolierung versehen ist, mit einem oder mehreren zusätzlichen Temperatursensoren ohne Entfernung der Wärmeisolierung, wobei ein Temperatursensor mit einem nadelförmigen Sensorhalter und mit einer Spitze ausgebildet ist, und von außerhalb der Wärmeisolierung unmittelbar durch die Wärmeisolierung bis zu einem Wärmekontaktbereich seiner Spitze mit einer Außenoberfläche des Metallbehälters geschoben wird, wobei weiterhin die Herstellung bzw. das Bestehen einer korrekten wärmeleitenden Verbindung des mindestens einen Temperatursensors mit der Außenoberfläche des Metallbehälters durch eine Messung des elektrischen Widerstandes zwischen Temperatursensor und Metallbehälter überprüft wird. Auf diese Weise können an fast beliebigen Stellen eines eingebauten Wärmespeichers nachträglich Temperatursensoren angeordnet werden. Gegebenenfalls ist zunächst ein Loch in einen die Wärmeisolierung umgebenden Mantel einzubringen (z. B. durch Bohren), jedoch kann dann der Temperatursensor sich selbst seinen Weg durch die Wärmeisolierung bahnen. "Unmittelbar" bedeutet in diesem Zusammenhang, dass der Temperatursensor bzw. nadelförmige Sensorhalter direkt zur Wärmeisolierung benachbart bzw. von dieser direkt umgeben ist, wobei die Wärmeisolierung ggf. auch zumindest teilweise in direktem Kontakt mit dem Temperatursensor bzw. nadelförmigen Sensorhalter ist. Insbesondere sind keine Führungsrohre oder Hülsen vorgesehen, in denen der Temperatursensor / nadelförmige Sensorhalter (beweglich) aufgenommen und derart von der Wärmeisolierung getrennt gelagert ist. Die Bereitstellung eines Loches bzw. Einführkanals in der Wärmeisolierung erfolgt dabei bevorzugt mit einem Durchmesser, der kleiner als der Durchmesser des Temperatursensors bzw. nadelförmigen Sensorhalters ist. Derart kann ebenfalls erreicht werden, dass der Temperatursensor / nadelförmige Sensorhalter in innigem Kontakt mit der umliegenden Wärmeisolierung ist und daher gut in seiner Lage fixiert ist. Der eigentliche Sensorbereich des Temperatursensors liegt in der Nähe der Spitze, wobei elektrische Messleitungen innerhalb des nadelförmigen Sensorhalters zu dessen hinterem - also der Spitze abgewandten -Ende verlaufen. Klarstellend sei angemerkt, dass der Sensorbereich des Temperatursensors, die elektrischen Messleitungen und der Sensorhalter eine Baueinheit bilden, so dass diese Komponenten miteinander lagefixiert verbunden sind, also insbesondere keine Relativbewegung dieser Komponenten zueinander möglich ist.

Bevorzugt wird der Sensorhalter schräg zur Außenoberfläche des Metallbehälters eingeschoben, wodurch leichter ein guter Wärmekontakt zur Außenoberfläche des Metallbehälters hergestellt werden kann. Besonders bevorzugt ist eine etwa tangentiale Lage des Temperatursensors zu der Außenoberfläche.

Dabei wird der Temperatursensor in direkten oder indirekten Wärmekontakt mit der Außenoberfläche des Metallbehälters gebracht. Er kann direkten metallischen Kontakt haben oder durch gut wärmeleitendes Material mit der Außenoberfläche verbunden werden. Das gut wärmeleitende Material kann unmittelbar an oder in dem Temperatursensor angebracht und (zumindest teilweise) gemeinsam mit dem Temperatursensor durch die Wärmeisolierung hin zur Außenoberfläche des Metallbehälters platziert werden. Es ist auch möglich, dass diese Vorgänge nacheinander ablaufen, also zum Beispiel zunächst der Temperatursensor durch die Wärmeisolierung getrieben und dann, wenn eine vorbestimmte Position erreicht ist, das gut wärmeleitende Material durch bzw. entlang des Sensorhalters hin zur Spitze gefördert wird.

Bevorzugt wird ein indirekter Wärmekontakt durch einen wärmeleitenden Kleber hergestellt. Dadurch wird sowohl eine Fixierung des Temperatursensors als auch eine gut wärmeleitende Verbindung erreicht.

Besonders bevorzugt wird ein auch elektrisch leitender und wärmeleitender Kleber zur Befestigung des Temperatursensors an der Außenoberfläche des Metallbehälters verwendet. Solche Kleber, die z. B. Beimischungen aus Grafit aufweisen, eignen sich besonders, weil damit das Vorhandensein einer guten Verbindung auch elektrisch nachgewiesen werden kann.

Die Herstellung bzw. das Bestehen einer korrekten wärmeleitenden Verbindung des Temperatursensors mit der Außenseite des Metallbehälters werden durch eine Messung des elektrischen Widerstandes zwischen Temperatursensor und Metallbehälter überprüft. Dies erlaubt sowohl eine Überprüfung des beschriebenen Verfahrens als auch im späteren Betrieb eine (gelegentliche oder periodische) Kontrolle des Temperatursensors auf korrekten Wärmekontakt. Es wird daher vorgeschlagen, dass der Temperatursensor mit dem nadelförmigen Sensorhalter unmittelbar durch die Wärmeisolierung bis zu einem Wärmekontaktbereich seiner Spitze mit einer Außenoberfläche des Metallbehälters geschoben wird, und dann ein Stromkreis angeschlossen und die elektrische Spannung überprüft wird. Aus der Prüfung kann geschlossen werden, ob ein elektrischer Kontakt zwischen Temperatursensor und Metallbehälter vorliegt. Falls nicht, kann der Temperatursensor weitergeschoben und/oder neu ausgerichtet und erneut (an anderer Stelle bzw. mit einer anderen Ausrichtung) durch die Wärmeisolierung geschoben werden.

Besonders vorteilhaft ist es, wenn nach dem Einbau eine Kalibrierung jedes zusätzlichen Temperatursensors mittels mindestens eines (vorher bereits) vorhandenen Temperatursensors und/oder anderer zusätzlicher Temperatursensoren erfolgt. Dann kommt es auf die Qualität des Wärmeübergangs zum Temperaturfühler nicht genau an, weil eine Korrektur z. B. für eine etwas schlechtere Wärmeverbindung vorgenommen werden kann.

Zur Lösung der Aufgabe trägt auch ein Temperatursensor bei zum Nachrüsten eines in einem Metallbehälter angeordneten Wärmespeichers einer Heizungsanlage, der mit einer Wärmeisolierung einer vorgegebenen Dicke versehen ist, wobei der Temperatursensor einen nadelförmigen Sensorhalter aufweist, der geeignet und gestaltet ist, die Wärmeisolierung von außen (unmittelbar) zu durchstoßen, so dass eine Spitze des Temperatursensors zur Temperaturmessung an dem oder in der Nähe des Metallbehälters positionierbar ist. Der erfindungsgemäße Temperatursensor weist dabei weiterhin einen Kanal oder eine Hülse zur Applikation von wärmeleitendem und/oder elektrisch leitendem Kleber in der Nähe der Spitze auf.

Bevorzugt weist die Spitze eine zur Durchdringung der Wärmeisolierung geeignete Form auf, ist insbesondere spitz oder (mit kleinem Radius) abgerundet für geschäumte Wärmeisolierungen und/oder mit einer Schneidkante versehen zum Durchdringen z. B. von Fasermaterial.

In einer besonderen Ausführungsform ist der Sensorhalter länger als die Dicke der Wärmeisolierung, so dass er bei einem schrägen Winkel zu einer Außenoberfläche des Metallbehälters gerade vollständig in der Wärmeisolierung zu liegen kommt. Es kann aus verschiedenen Gründen sinnvoll sein, den Temperatursensor nicht senkrecht auf die Außenoberfläche der Wärmeisolierung stoßen zu lassen, sondern in einem (flachen) Winkel, insbesondere tangential zur Form der Außenoberfläche. Auf diese Weise kommt ein größerer Teil des Temperatursensors nahe zur Außenoberfläche zu liegen, wodurch sicher ein guter Wärmeübergang erreicht werden kann, insbesondere in Verbindung mit wärmeleitendem Kleber.

Dazu weist der Temperatursensor einen Kanal und/oder eine Hülse zur Applikation von wärmeleitendem und/oder elektrisch leitendem Kleber in der Nähe der Spitze auf. Der Kanal bzw. die Hülse ist bevorzugt innerhalb des Sensorhalters angeordnet und erstreckt sich durch diesen hindurch, insbesondere bis hin zur Spitze. Nach der Einführung des Temperatursensors kann dann eine geeignete Menge Kleber in einen Wärmekontaktbereich eingebracht werden, wodurch ein haltbarer und guter Wärmekontakt hergestellt wird.

Ein Ausführungsbeispiel betrifft auch einen Bausatz zum Nachrüsten eines in einem Metallbehälter angeordneten Wärmespeichers einer Heizungsanlage, der mit einer Wärmeisolierung einer vorgegebenen Dicke versehen ist, mit zusätzlichen Temperatursensoren wie oben beschrieben ohne Entfernung der Wärmeisolierung, enthaltend mindestens einen Temperatursensor mit nadelförmigem Sensorhalter, der länger als die Dicke der Wärmeisolierung und mit einer Spitze ausgebildet ist, die so gestaltet ist, dass sie (unmittelbar) durch eine Wärmeisolierung bis zu einem Wärmekontakt mit einer Außenoberfläche des Metallbehälters geschoben werden kann, wobei an einem hinteren Ende des Sensorhalters elektrische Messleitungen nach außen geführt sind, die an eine Auswerteelektronik anschließbar sind.

Bevorzugt enthält der Bausatz Mittel zur Zugentlastung und/oder zum Verschließen eines Einschubkanals des eingebauten Temperatursensors und/oder seiner Messleitungen. Dies können Kleberosetten, elastische Verschlussstopfen oder auf den Sensorhalter aufschiebbare Endstücke sein. Wichtig ist, dass der Einschubkanal keine Wärmeverluste bewirkt und dass die nachgerüsteten Temperatursensoren gewisse mechanische Belastungen aushalten können, insbesondere auch Zugbelastungen.

Zusätzlich kann der Bausatz einen elektrisch leitenden und wärmeleitenden Kleber in einem geeigneten Behälter sowie Mittel zum Applizieren des Klebers an der Spitze des Sensorhalters vor, bei und/oder nach dem Einschieben enthalten.

Die Erfindung betrifft auch ein Computerprogrammprodukt, umfassend Befehle die bewirken, dass nach der Durchführung des beschriebenen Verfahrens mit einem Temperatursensor gemäß obiger Beschreibung außer einer Auswertung von Messignalen auch wiederholt eine Messung des elektrischen Widerstandes zwischen Temperatursensor und Metallbehälter und/oder eine Kalibrierung von zusätzlichen Temperatursensoren mittels mindestens eines vorher bereits vorhandenen Temperatursensors durchgeführt wird. So können Änderungen in der Qualität der wärmeleitenden Verbindung von Temperatursensor und Oberfläche des Metallbehälters erkannt und durch Nachkalibrierung ausgeglichen werden. Zunächst ist es schon von Vorteil, wenn die Qualität der Wärmeverbindung zu vorgebbaren Zeiten überprüft werden kann. Besonders wichtig ist aber auch, dass selbst eine weniger gute, oder schlechter werdende wärmeleitende Verbindung nicht direkt zum Ausfall eines nachgerüsteten Temperatursensors führen muss. Da zumindest bei bestimmten Zuständen davon ausgegangen werden kann, dass die Temperatur in einem Wärmespeicher überall im Wesentlichen gleich ist, kann man bei Vorhandensein mehrerer Temperatursensoren (oder zumindest eines ursprünglich fest installierten) durch Vergleich feststellen, welcher Sensor möglicherweise eine geringere Wärmeanbindung hat und deshalb eine zu niedrige Temperatur anzeigt. Dies kann dann mit einer entsprechenden Korrektur aller von diesem Sensor gemessenen Messwerte (durch ein Computerprogramm) ausgeglichen werden, beispielsweise durch Addieren eines Korrekturwertes, der auch von Zeit zu Zeit überprüft und geändert werden kann. Der Sensor kann dann wie ein optimal installierter Sensor genutzt werden.

Die Erläuterungen zu den beschriebenen Verfahren können auch zur näheren Charakterisierung der Temperatursensoren herangezogen werden, und umgekehrt. Die beschriebenen Anordnungen können auch so eingerichtet sein, dass damit das Verfahren durchgeführt wird.

Ein schematisches Ausführungsbeispiel der Erfindung, auf das diese jedoch nicht beschränkt ist, und die Funktionsweise des Verfahrens werden nun anhand der Zeichnung näher erläutert. Es stellen dar:
- Fig. 1:: einen Temperatursensor mit einem nadelförmigen Sensorhalter,
- Fig. 2:: einen schematischen Längsschnitt durch einen Wärmespeicher mit nachgerüsteten Temperatursensoren,
- Fig. 3:: einen schematischen Ausschnitt aus einem Querschnitt durch einen Wärmespeicher mit nachgerüstetem Temperatursensor, und
- Fig. 4:: eine schematische Übersicht über eine Heizungsanlage mit nachgerüsteten Temperatursensoren.

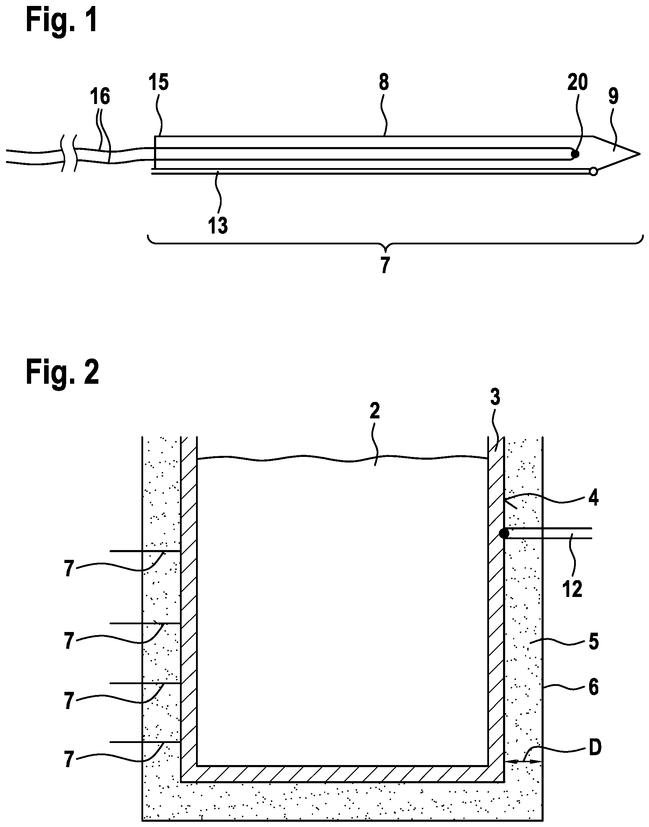

Fig. 1 zeigt schematisch einen Temperatursensor 7 mit einem nadelförmigen Sensorhalter 8, einer Spitze 9 und einem hinteren Ende 15, aus dem elektrische Messleitungen 16 abgehen. Der Sensorhalter 8 weist einen Kanal 13 zur Applikation von wärmeleitendem Kleber 11 auf.

Fig. 2 zeigt schematisch, wie solche Temperatursensoren 7 zur Nachrüstung eines Wärmespeichers 2 einer Heizungsanlage 1 eingesetzt werden können. Ein Metallbehälter 3 umgibt den Wärmespeicher 2 (meist mit Wasser gefüllt), wobei ein ursprünglich vorhandener Temperatursensor 12 fest installiert ist, aber für fortschrittliche Regelungen nicht genügend Informationen liefern kann. Daher sind zu einer Außenoberfläche 4 des Metallbehälters 3 mehrere Temperatursensoren 7 geführt, die die Temperatur in unterschiedlichen Höhen am Wärmespeicher 2 messen. Dazu sind die Temperatursensoren 7 von außen durch eine Wärmeisolierung 5 der Dicke D eingeschoben, so dass ihre Spitze 9 an oder nahe zu der Außenoberfläche 4 positioniert ist.

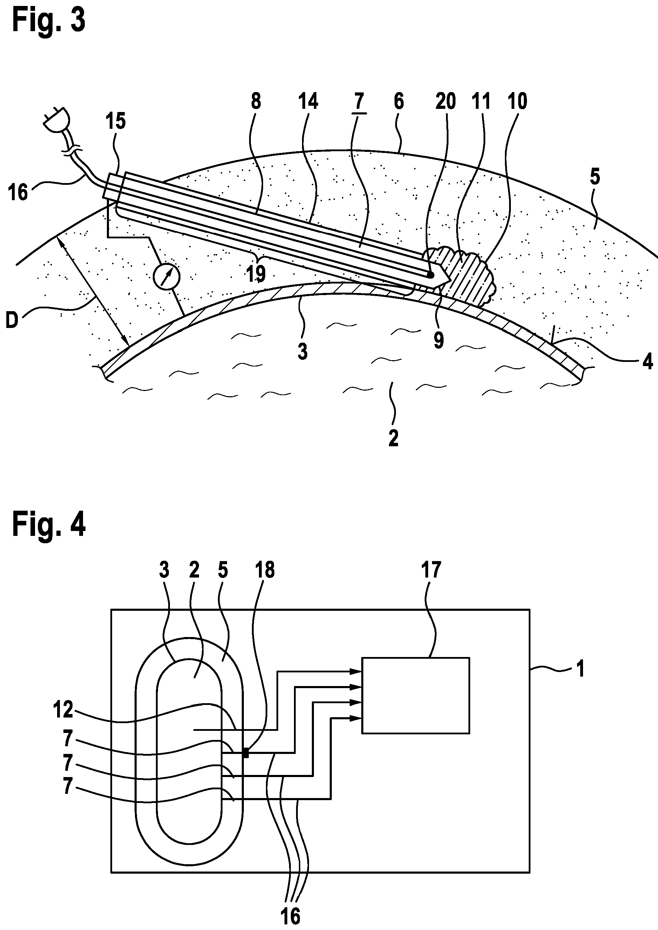

Fig. 3 zeigt die Einbausituation eines zusätzlichen Temperaturfühlers 7 im Detail. In dem gezeigten Ausführungsbeispiel ist der Temperatursensor 7 unmittelbar/direkt schräg durch die Wärmeisolierung 5 geführt, und zwar etwa in einer tangentialen Richtung zur Außenoberfläche 4 des Metallbehälters 3. Andere Winkel sind jedoch ebenfalls möglich. Je nach dem gewählten Winkel sollte die Länge des Temperatursensors 7 bemessen sein. Es ist vorteilhaft, wenn dieser nicht weit aus der Wärmeisolierung 5 herausragt, sondern etwa mit deren Hülle 6 oder seiner Außenoberfläche abschließt. Der Temperatursensor kann daher eine Länge von z. B. 3 bis 20 cm, insbesondere 5 bis 15 cm [Zentimeter], und einen Durchmesser von z. B. 1 bis 6 mm, insbesondere 2 bis 4 mm [Millimeter] aufweisen. In der gezeigten Ausgestaltung kommt die Spitze 9 des nadelförmigen Sensorhalters 8 in der Nähe der Außenoberfläche 4 zu liegen, wodurch Wärme in einem Wärmekontaktbereich 10 von der Außenoberfläche zur Spitze 9 des Temperatursensors 7 gelangt. Im Bereich der Spitze 9 befindet sich das eigentliche Thermoelement 20 des Temperatursensors 7. Der Wärmeübergang kann unterstützt werden, indem ein wärmeleitender Kleber 11 in den Wärmekontaktbereich 10 eingebracht wird. Die führt gleichzeitig zu einer Fixierung des Temperatursensors 7 und einer Zugentlastung. Wenn der wärmeleitende Kleber 11 auch noch elektrisch leitfähig ist (was meistens der Fall ist, z. B. bei graphithaltigem Kleber), kann die Qualität der Wärmeverbindung durch eine Messung des ohmschen Widerstandes zwischen Temperatursensor 7 und Metallbehälter 3 ermittelt werden. Dies ist messtechnisch eine sehr einfache Aufgabe, da sowohl der Metallbehälter 3 als auch der Sensorhalter 8 meist metallisch sind und daher eine Widerstandsmessung zwischen beiden leicht durchführbar ist, wie schematisch angedeutet. Zur Applikation des Klebers 11 ist eine Hülse 14 um den Sensorhalter 8 vorgesehen oder ein Kanal 13 (wie in Fig 1 dargestellt). Vor dem Einschieben des Temperatursensors 7 muss gegebenenfalls ein Loch in eine die Wärmeisolierung 5 umgebende Hülle 6 gemacht werden. Beim Einschieben des Temperatursensors 7 entsteht ein Einschubkanal 19, der durch einen geeigneten Stopfen 18 oder ein anderes Mittel zur gleichzeitigen Zugentlastung verschlossen werden kann.

Fig. 4 zeigt nochmals im Überblick eine (modernisierte) Heizungsanlage 1 mit einem Wärmespeicher 2, der mit zusätzlichen Temperatursensoren 7 zu einem ursprünglich vorhandenen Temperatursensor 12 nachgerüstet ist. Alle Temperatursensoren 7, 12 sind über elektrische Messleitungen 16 mit einer Auswertelektronik 17 verbunden, die dadurch den jeweiligen Zustand des Wärmespeichers 2 genau analysieren kann. Außerdem kann die Auswerteelektronik 17 den Übergangswiderstand zwischen jedem Temperatursensor 7 und dem Metallbehälter 3 messen und dadurch eventuelle Fehler feststellen. Darüber hinaus kann sie auch die gemessenen Temperaturen der einzelnen Temperatursensoren 7 untereinander oder mit der des ursprünglich vorhandenen Temperatursensors 12 vergleichen, so dass auf diesem Wege nicht nur Fehler festgestellt, sondern sogar Nachkalibrierungen durchgeführt werden können. Angedeutet ist auch die mögliche Position einer Zugentlastung 18, die auch zum Verschließen eines Einschubkanals 19 dienen kann.

Die vorliegende Erfindung erlaubt eine einfache Nachrüstung von vorhandenen Wärmespeichern 2 mit zusätzlichen Temperatursensoren 7 ohne Entfernung einer Wärmeisolierung 5, so dass Heizungsanlagen 1 ohne Austausch ihres Wärmespeichers 2 modernisiert und an höchste Standards angepasst werden können.

### Bezugszeichenliste

- 1: Heizgerät
- 2: Wärmespeicher
- 3: Metallbehälter
- 4: Außenoberfläche
- 5: Wärmeisolierung
- 6: Hülle der Wärmeisolierung
- 7: Temperatursensor
- 8: Nadelförmiger Sensorhalter
- 9: Spitze
- 10: Wärmekontaktbereich
- 11: Wärmeleitender (und elektrisch leitender) Kleber
- 12: Vorhandener Temperatursensor
- 13: Kanal
- 14: Hülse
- 15: Hinteres Ende
- 16: Elektrische Messleitungen
- 17: Auswerteelektronik
- 18: Mittel zur Zugentlastung
- 19: Einschubkanal
- 20: Eigentliches Thermoelement

- D: Dicke der Wärmeisolierung

## Patentansprüche

1. Verfahren zum Nachrüsten eines in einem Metallbehälter (3) angeordneten Wärmespeichers (2) einer Heizungsanlage (1), der mit einer Wärmeisolierung (5) versehen ist, mit mindestens einem zusätzlichen Temperatursensor (7) ohne Entfernung der Wärmeisolierung (5), wobei der mindestens eine Temperatursensor (7) mit einem nadelförmigen Sensorhalter (8) und mit einer Spitze (9) ausgebildet ist und von außerhalb der Wärmeisolierung (5) unmittelbar durch die Wärmeisolierung (5) bis zu einem Wärmekontaktbereich (10) seiner Spitze (9) mit einer Außenoberfläche (4) des Metallbehälters (3) geschoben wird, **dadurch gekennzeichnet, dass** die Herstellung bzw. das Bestehen einer korrekten wärmeleitenden Verbindung des mindestens einen Temperatursensors (7) mit der Außenoberfläche (4) des Metallbehälters (3) durch eine Messung des elektrischen Widerstandes zwischen Temperatursensor (7) und Metallbehälter (3) überprüft wird.

2. Verfahren nach Anspruch 1, wobei der Sensorhalter (8) schräg zur Außenoberfläche (4) des Metallbehälters (3) eingeschoben wird.

3. Verfahren nach Anspruch 1 oder 2, wobei der Temperatursensor (7) in direkten oder indirekten Wärmekontakt mit der Außenoberfläche (4) des Metallbehälters (3) gebracht wird.

4. Verfahren nach Anspruch 3, wobei ein indirekter Wärmekontakt durch einen wärmeleitenden Kleber (11) hergestellt wird.

5. Verfahren nach Anspruch 3 oder 4, wobei ein elektrisch leitender und wärmeleitender Kleber (11) zur Befestigung des Temperatursensors (7) an der Außenoberfläche (4) des Metallbehälters (3) verwendet wird.

6. Verfahren nach einem der vorhergehenden Ansprüche, wobei nach dem Einbau eine Kalibrierung jedes zusätzlichen Temperatursensors (7) mittels mindestens eines vorhandenen Temperatursensors (12) und/oder mindestens eines anderen zusätzlichen Temperatursensors (7) erfolgt.

7. Temperatursensor (7) zum Nachrüsten eines in einem Metallbehälter (3) angeordneten Wärmespeichers (2) einer Heizungsanlage (1), der mit einer Wärmeisolierung (5) einer vorgegebenen Dicke (D) versehen ist, wobei der Temperatursensor (7) einen nadelförmigen Sensorhalter (8) aufweist, der geeignet und gestaltet ist, die Wärmeisolierung (5) von außen unmittelbar zu durchstoßen, so dass eine Spitze (9) des Temperatursensors (7) zur Temperaturmessung an dem oder in der Nähe des Metallbehälters (3) positionierbar ist, **dadurch gekennzeichnet, dass** der Temperatursensor (7) einen Kanal (13) oder eine Hülse (14) zur Applikation von wärmeleitendem und/oder elektrisch leitendem Kleber (11) in der Nähe der Spitze (9) aufweist.

8. Temperatursensor nach Anspruch 7, wobei die Spitze (9) eine zur Durchdringung der Wärmeisolierung (5) geeignete Form aufweist.

9. Temperatursensor nach Anspruch 7 oder 8, wobei der Sensorhalter (8) länger ist als die Dicke (D) der Wärmeisolierung, so dass er bei einem schrägen Winkel zu einer Außenoberfläche (4) des Metallbehälters (3) gerade vollständig in der Wärmeisolierung (5) zu liegen kommt.

10. Bausatz zum Nachrüsten eines in einem Metallbehälter (3) angeordneten Wärmespeichers (2) einer Heizungsanlage (1), der mit einer Wärmeisolierung (5) einer vorgegebenen Dicke (D) versehen ist, mit mindestens einem zusätzlichen Temperatursensor (7) gemäß einem der Ansprüche 7 bis 9 ohne Entfernung der Wärmeisolierung (5), enthaltend mindestens einen Temperatursensor (7) mit nadelförmigem Sensorhalter (8), der länger als die Dicke (D) der Wärmeisolierung (5) und mit einer Spitze (9) ausgebildet ist, die so gestaltet ist, dass sie unmittelbar durch die Wärmeisolierung (5) bis zu einem Wärmekontaktbereich (10) mit einer Außenoberfläche (4) des Metallbehälters (3) geschoben werden kann, wobei an einem hinteren Ende (15) des Sensorhalters (8) elektrische Messleitungen (16) nach außen geführt sind, die an eine Auswerteelektronik (17) anschließbar sind.

11. Bausatz Anordnung nach Anspruch 10 , wobei der Bausatz Mittel (18) zur Zugentlastung und/oder zum Verschließen eines Einschubkanals (19) des eingebauten Temperatursensors (7) und/oder seiner Messleitungen (16) enthält.

12. Bausatz nach Anspruch 10 oder 11, wobei der Bausatz einen elektrisch leitenden und wärmeleitenden Kleber (11) enthält sowie Mittel (13, 14) zum Applizieren des Klebers (11) an der Spitze (9) des Sensorhalters (8) vor, bei und/oder nach dem Einschieben.

13. Computerprogrammprodukt umfassend Befehle, die bewirken, dass nach der Durchführung des Verfahrens gemäß einem der Ansprüche 1 bis 6 mit einem Temperatursensor (7) gemäß einem der Ansprüche 7 bis 9 außer einer Auswertung von Messignalen auch wiederholt eine Messung des elektrischen Widerstandes zwischen Temperatursensor (7) und Metallbehälter (3) und/oder eine Kalibrierung von zusätzlichen Temperatursensoren (7) mittels mindestens eines vorher bereits vorhandenen Temperatursensors (7) durchgeführt wird.

## Claims

1. Method for retrofitting a heat accumulator (2) of a heating system (1) arranged in a metal container (3) and provided with thermal insulation (5) with at least one additional temperature sensor (7) without removing the thermal insulation (5), wherein the at least one temperature sensor (7) is designed with a needle-shaped sensor holder (8) and with a tip (9) and is pushed from outside the thermal insulation (5) directly through the thermal insulation (5) to a heat contact area (10) of its tip (9) with an outer surface (4) of the metal container (3), **characterised in that** the establishment or existence of a correct heat-conducting connection between the at least one temperature sensor (7) and the outer surface (4) of the metal container (3) is checked by measuring the electrical resistance between the temperature sensor (7) and the metal container (3).

2. Method according to claim 1, wherein the sensor holder (8) is inserted at an angle to the outer surface (4) of the metal container (3).

3. Method according to claim 1 or 2, wherein the temperature sensor (7) is brought into direct or indirect thermal contact with the outer surface (4) of the metal container (3).

4. Method according to claim 3, wherein indirect heat contact is established by a heat-conducting adhesive (11).

5. Method according to claim 3 or 4, wherein an electrically conductive and thermally conductive adhesive (11) is used to attach the temperature sensor (7) to the outer surface (4) of the metal container (3).

6. Method according to one of the preceding claims, wherein after installation, each additional temperature sensor (7) is calibrated by means of at least one existing temperature sensor (12) and/or at least one other additional temperature sensor (7).

7. Temperature sensor (7) for retrofitting a heat accumulator (2) of a heating system (1) arranged in a metal container (3), which is provided with thermal insulation (5) of a predetermined thickness (D), wherein the temperature sensor (7) has a needle-shaped sensor holder (8) which is suitable and designed to penetrate the thermal insulation (5) directly from the outside so that a tip (9) of the temperature sensor (7) can be positioned on or near the metal container (3) for temperature measurement, **characterised in that** the temperature sensor (7) has a channel (13) or a sleeve (14) for applying heat-conducting and/or electrically conductive adhesive (11) near the tip (9).

8. Temperature sensor according to claim 7, wherein the tip (9) has a shape suitable for penetrating the thermal insulation (5).

9. Temperature sensor according to claim 7 or 8, wherein the sensor holder (8) is longer than the thickness (D) of the heat insulation so that, when at an oblique angle to an outer surface (4) of the metal container (3), it lies completely within the heat insulation (5).

10. Kit for retrofitting a heat accumulator (2) of a heating system (1) arranged in a metal container (3), which is provided with thermal insulation (5) of a predetermined thickness (D), with at least one additional temperature sensor (7) according to one of claims 7 to 9 without removing the thermal insulation (5), comprising at least one temperature sensor (7) with a needle-shaped sensor holder (8), which is longer than the thickness (D) of the heat insulation (5) and has a tip (9) designed so that it can be pushed directly through the heat insulation (5) to a heat contact area (10) with an outer surface (4) of the metal container (3), wherein electrical measuring lines (16) are led outwards at a rear end (15) of the sensor holder (8) and can be connected to an evaluation electronics (17).

11. Kit arrangement according to claim 10, wherein the kit contains means (18) for strain relief and/or for closing an insertion channel (19) of the installed temperature sensor (7) and/or its measuring lines (16).

12. Kit according to claim 10 or 11, wherein the kit contains an electrically conductive and thermally conductive adhesive (11) and means (13, 14) for applying the adhesive (11) to the tip (9) of the sensor holder (8) before, during and/or after insertion.

13. Computer program product comprising instructions which cause that, after the method according to one of claims 1 to 6 has been carried out with a temperature sensor (7) according to one of claims 7 to 9, in addition to an evaluation of measurement signals, a measurement of the electrical resistance between the temperature sensor (7) and the metal container (3) and/or a calibration of additional temperature sensors (7) by means of at least one previously existing temperature sensor (7) is also carried out repeatedly.

## Revendications

1. Procédé de rééquipement d'un accumulateur de chaleur (2) agencé dans un récipient métallique (3) d'une installation de chauffage (1) qui est pourvu d'une isolation thermique (5), avec au moins un capteur de température (7) supplémentaire sans retrait de l'isolation thermique (5), dans lequel l'au moins un capteur de température (7) est formé avec un support de capteur (8) en forme d'aiguille et avec une pointe (9) et est poussé de l'extérieur de l'isolation thermique (5) directement à travers l'isolation thermique jusqu'à une zone de contact thermique (10) de sa pointe (9) avec une surface extérieure (4) du récipient métallique (3), **caractérisé en ce que** l'établissement ou l'existence d'une liaison thermoconductrice correcte de l'au moins un capteur de température (7) avec la surface extérieure (4) du récipient métallique (3) est vérifiée par une mesure de la résistance électrique entre le capteur de température (7) et le récipient métallique (3).

2. Procédé selon la revendication 1, dans lequel le support de capteur (8) est inséré en biais par rapport à la surface extérieure (4) du récipient métallique (3).

3. Procédé selon la revendication 1 ou 2, dans lequel le capteur de température (7) est amené en contact thermique direct ou indirect avec la surface extérieure (4) du récipient métallique (3).

4. Procédé selon la revendication 3, dans lequel un contact thermique indirect est établi par une colle (11) thermoconductrice.

5. Procédé selon la revendication 3 ou 4, dans lequel une colle (11) électroconductrice et thermoconductrice est utilisée pour la fixation du capteur de température (7) à la surface extérieure (4) du récipient métallique (3).

6. Procédé selon l'une quelconque des revendications précédentes, dans lequel après l'installation, un étalonnage de chaque capteur de température (7) supplémentaire est effectué au moyen d'au moins un capteur de température (12) présent et/ou d'au moins un autre capteur de température (7) supplémentaire.

7. Capteur de température (7) pour le rééquipement d'un accumulateur de chaleur (2) agencé dans un récipient métallique (3) d'une installation de chauffage (1) qui est pourvu d'une isolation thermique (5) d'une épaisseur prédéfinie (D), dans lequel le capteur de température (7) présente un support de capteur (8) en forme d'aiguille qui est approprié et conçu afin de traverser l'isolation thermique (5) de l'extérieur directement de sorte qu'une pointe (9) du capteur de température (7) puisse être positionnée pour la mesure de température au niveau ou à proximité du récipient métallique (3), **caractérisé en ce que** le capteur de température (7) présente un canal (13) ou une douille (14) pour l'application de colle (11) thermoconductrice et/ou électroconductrice à proximité de la pointe (9).

8. Capteur de température selon la revendication 7, dans lequel la pointe (9) présente une forme appropriée à la pénétration de l'isolation thermique (5).

9. Capteur de température selon la revendication 7 ou 8, dans lequel le support de capteur (8) est plus long que l'épaisseur (D) de l'isolation thermique de sorte qu'il vienne se poser en cas d'angle oblique par rapport à une surface extérieure (4) du récipient métallique (3) juste complètement dans l'isolation thermique (5).

10. Kit de rééquipement d'un accumulateur de chaleur (2) agencé dans un récipient métallique (3) d'une installation de chauffage (1) qui est pourvu d'une isolation thermique (5) d'une épaisseur (D) prédéfinie, avec au moins un capteur de température (7) supplémentaire selon l'une quelconque des revendications 7 à 9 sans retrait de l'isolation thermique contenant au moins un capteur de température (7) avec un support de capteur (8) en forme d'aiguille qui est formé plus long que l'épaisseur (D) de l'isolation thermique (5) et avec une pointe (9) qui est conçue de sorte qu'il puisse être poussé directement par l'isolation thermique (5) jusqu'à une zone de contact thermique (10) avec une surface extérieure (4) du récipient métallique (3), dans lequel des câbles de mesure (16) électriques sont guidés vers l'extérieur à une extrémité (15) arrière du support de capteur (8), câbles qui peuvent être raccordés à une électronique d'évaluation (17).

11. Kit selon la revendication 10,
dans lequel le kit contient des moyens (18) pour la décharge de traction et/ou pour la fermeture d'un canal d'enfoncement (19) du capteur de température (7) intégré et/ou de ses câbles de mesure (16).

12. Kit selon la revendication 10 ou 11,
dans lequel le kit contient une colle (11) électroconductrice et
thermoconductrice ainsi que des moyens (13, 14) d'application de la colle (11) sur la pointe (9) du support de capteur (8) avant, lors et/ou après l'insertion.

13. Produit de programme informatique comprenant des ordres qui amènent à réaliser également de manière répétée après l'exécution du procédé selon l'une quelconque des revendications 1 à 6 avec un capteur de température (7) selon l'une quelconque des revendications 7 à 9 en dehors d'une évaluation de signaux de mesure une mesure de la résistance électrique entre le capteur de température (7) et le récipient métallique (3) et/ou un étalonnage de capteurs de température (7) supplémentaires au moyen d'au moins un capteur de température (7) déjà présent au préalable.
